# EUROPEAN PATENT SPECIFICATION

(11) **EP 1 704 019 B1**
(45) Date of publication and mention of the grant of the patent: **10.02.2010**
(21) Application number: 03819146.6
(22) Date of filing: 22.12.2003
(51) Int. Cl.: B23Q 39/02, B23B 39/20

(54) **ROTATING TOOLHOLDER**
DREHBARER WERKZEUGHALTER
PORTE-OUTIL ROTATIF

(43) Date of publication of application: 27.09.2006
(73) Proprietor: DUPLOMATIC AUTOMATION S.R.L., 20025 Legnano (Milano) (IT)
(72) Inventor: DE BERNARDI, Franco, I-21052 Busto Arsizio (IT)
(74) Representative: Perani, Aurelio
(86) International application number: PCT/IT2003/000852
(87) International publication number: WO 2005/061174

(56) References cited:
- IT-B- 1 236 912
- US-A- 4 051 583
- US-A- 5 125 142

## Description

This invention relates to a rotating toolholder according to the preamble of claim 1.

In particular the rotating toolholder according to this invention may find application when used on a rotating toolholder turret or as an individual toolholder.

An example of a rotating toolholder according to the preamble of claim 1 is described in Italian patent IT-1236912. According to the known state of the art mentioned above, a toolholding turret comprises a base body and a table which is rotatably mounted on the base body. The table is provided with housings to receive a plurality of spindles which are successively moved into a working position where an actuator is provided to cause the spindle located there to rotate.

Rotary motion is provided to the spindle through coupling means provided at the shank of each spindle and corresponding matching means provided on the actuator. The coupling means of each spindle are provided with centering members which keep the spindle orientated during the non-working stage, for example during the stage of angular movement of the table. In particular these members comprise a sleeve which is able to move on the spindle and rotates with it as one piece and is provided with a pair of radially projecting teeth. When the actuator is engaged with the coupling means of the spindle the teeth engage an annular groove provided internally in the spindle housing so as to allow it to rotate. Conversely, when the actuator is disengaged from the coupling means the teeth engage an axial groove thus preventing rotation of the spindle and loss of its angular orientation. However, toolholders of the type mentioned above, although making it possible to correctly maintain the angular position of the spindle with respect to the actuator, have considerable disadvantages when the actuator does not engage the coupling means correctly, a situation which can for example arise when the actuator is correctly engaged with the coupling means of the spindle but is not fully inserted to bring about axial displacement of the sleeve to effect complete disengagement of the teeth from the axial groove and their engagement in the annular groove. In this situation the centering members can suffer damage or breakage after the application of a torque by the actuator and replacement of the sleeve is therefore necessary. When it is necessary to replace the sleeve carrying the engaging teeth or other internal members of the device it is necessary to remove the toolholder from the rotating toolholder table and dismantle the toolholder from the front in order to remove the sleeve. In the extreme it may even be necessary to send the toolholder to the manufacturer for the necessary repair or replacements. This obviously gives rise to a number of disadvantages from both the economical point of view and from the point of view of maintenance times.

As a consequence, there is a strongly need to have rotating toolholders provided with safety means to protect the centering devices from any damage and/or breakage.

The object of this invention is to provide a rotating toolholder having structural and functional characteristics such as to satisfy the abovementioned requirements and at the same time to overcome the disadvantages mentioned in relation to the known art. This object is accomplished through a rotating toolholder according to claim 1.

Another object of the invention is to provide a rotating toolholder capable of rendering any maintenance and/or replacement of the centering/safety members easy.

Further features and advantages of the rotating toolholder according to this invention will be apparent from the following description of a preferred embodiment provided non-restrictively by way of indication with reference to the appended figures, in which:
- Figure 1 shows a schematic view of a rotating toolholder according to the invention,
- Figure 2 shows a frontal view in partial cross-section of the rotating toolholder in Figure 1,
- Figures 3 to 5 show views of the toolholder in Figure 1 in cross-section along the line Y-Y in Figure 2, in different operating configurations,
- Figure 6 shows a schematic view of a rotating toolholder according to a second embodiment of the invention,
- Figure 7 shows a front view in partial cross-section of the rotating toolholder in Figure 6,
- Figures 8 to 10 show views of the toolholder in Figure 6 in cross-section along the line Y-Y in Figure 7, in different operating configurations,
- Figure 11 shows a front view in partial cross-section of a toolholder according to a third embodiment of the invention,
- Figure 12 shows a schematic perspective view of a detail of the toolholder in Figure 11,
- Figure 13 shows a view of the detail in Figure 12 in cross-section along the line Y-Y in Figure 11,
- Figure 14 shows a view of the detail in Figure 12 in cross-section along the line X-X in Figure 13,
- Figures 15 to 17 show views of the toolholder in Figure 11 in cross-section along the line Y-Y in different operating configurations,
- Figure 18 shows a schematic perspective view of a detail of a toolholder according to a fourth embodiment,
- Figure 19 shows a view of the detail in Figure 18 in cross-section along the line Y-Y in Figure 11,
- Figure 20 shows a view of the detail in Figure 18 in cross-section along the line X-X in Figure 19,
- Figures 21 to 23 show views in partial cross-section of a toolholder according to the fourth embodiment, in different operating configurations.

With reference to the appended figures, 1 indicates as a whole a rotating toolholder according to this invention.

Toolholder 1 comprises a spindle 2 mounted in a housing 3 so that it can rotate about a longitudinal axis X-X, and a bush 4 associated with the spindle 2 so as to be able to move axially along longitudinal axis X-X and rotating as one piece with the spindle 2. According to a preferred embodiment the bush 4 has at one end 4a thereof a flange 15 able to abut against an axial stop member 16 provided at one head end 17 of the housing 3 in order to limit the axial movement of the bush 4 towards the head end 9 of the shank 2a of the spindle 2.

In a way which is in itself known, the spindle 2 is provided on the side opposite that of the end 2a with a tool 13, for example a drill bit, to carry out an operation on a workpiece.

According to a preferred embodiment the bush 4 is externally associated with the shank 2a of the spindle 2 through an axially grooved coupling 5 and 6 which allows the bush 4 to move axially with respect to the spindle 2 along the axis X-X while maintaining the constraint ensuring rotation about the axis X-X.

Rotary motion is provided to the spindle 2 through coupling means provided on the shank 2a by corresponding matching means 14 (illustrated in the figure by dashed lines) provided on an actuator (not shown in the figures), which may for example be an electric motor. In the example the coupling means for spindle 2 take the form of axial coupling 5 and 6 provided on the shank 2a of the spindle 2, but alternatively it is possible to provide a different arrangement as described for example in Italian patent IT-1236912.

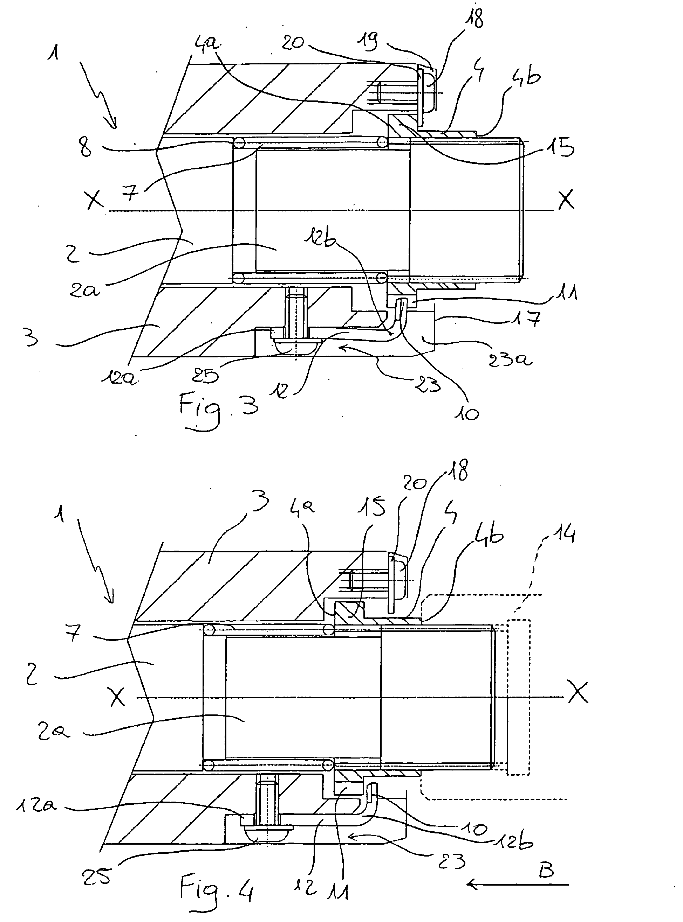

In a manner which is in itself conventional, matching coupling means 14 of the actuator are designed to act on the bush 4 to cause it to move axially with respect to the spindle 2 along the axis X-X in the direction indicated by B in Figure 4. For example matching coupling means 14 act on the end 4b of the bush 4 which is opposite to the end 4a where flange 15 is provided.

Axial movement of the bush 4 in the longitudinal direction X-X, in particular in the direction B, is opposed by elastic means 7 which act on the bush 4 with a predetermined elastic load F₁, In the example illustrated in the figures elastic means 7 take the form of a helical spring which acts between the shoulder 8 of the shank 2a and the end 4a of bush 4 in such a way as to exert an axial thrust on the bush 4 in the direction of the head end 9 of the shank 2a of the spindle 2.

The toolholder 1 also comprises safety means 10, 11 which can move reversibly from a disengaged configuration in which they allow spindle 2 to rotate (Figure 4) and an engaged configuration (Figure 3) in which they interact together to oppose rotation of the spindle 2.

In order to allow mutual engagement and disengagement of safety means 10 and 11, the bush 4 can move axially between an operating position (Figure 4) and a stand-by position (Figure 3).

When the bush 4 is in the operating position, the safety means 10 and 11 are disengaged and the spindle 2 is free to rotate about the axis X-X. In particular when the bush 4 is in the operating position the spindle 2 can be caused to rotate by an actuator, such as for example an electric motor, through the matching coupling means 14. In this way, the tool 13 carried by spindle 2 is caused to rotate and can carry out the machining operation.

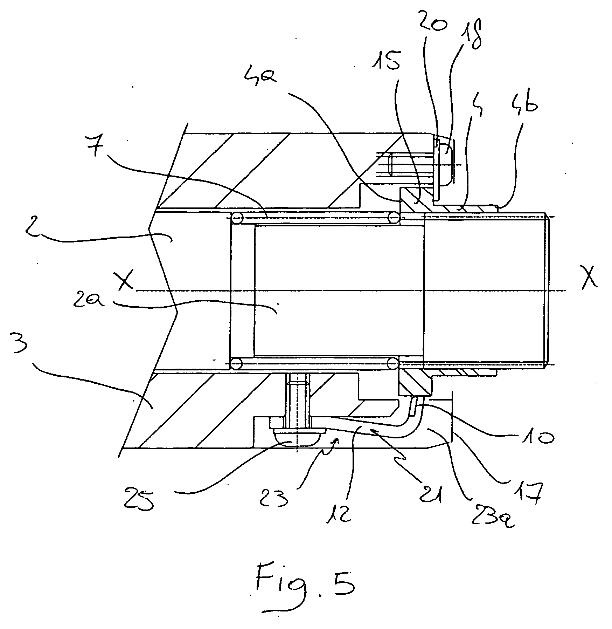

When the bush 4 is in the stand-by position, rotation of the spindle 2 is prevented when safety means 10,11 are in the engaged configuration (Figure 3) while, as will be evident from the description provided below, rotation is allowed when the safety means 10, 11 are in the disengaged configuration (Figure 5).

It is important to note that when the bush 4 is in the stand-by position and the safety means 10 and 11 are in the engaged configuration (Figure 3), the latter act as angular stop members, or centering members, since they make it possible to keep the spindle 2 in a predetermined angular position preventing it from rotating freely. In this way maintenance of a correct angular orientation for spindle 2 is guaranteed throughout the time that spindle 2 is inoperative.

When the bush 4 is in the stand-by position and the safety means 10, 11 are in the engaged configuration (Figure 3), the flange 15 of the bush 4 abuts, under the thrust of the helical spring 7, against the axial stop member 16 provided in the housing 3 at its end 17 facing the actuator.

Advantageously, the axial stop member 16 is removably associated with the housing 3 by a notch 19 provided at the end 17 of the housing 3 and is constituted of a screw 18 able to secure a washer 20, in the example of rectangular shape, which acts as an axial stop for the flange 15 of the bush 4. In this way the bush 4 can be mounted on the shank 2a of the spindle 2 even when the toolholder 1 has already been assembled.

Furthermore, through the use of a removable axial stop member 16, the bush 4 can easily be removed from the housing 3, for example in the event of maintenance or replacement of the same. Alternatively axial stop member 16 may comprise an open elastic ring or a Seeger ring.

The safety means 10,11 comprise a first safety member associated with the housing 3 and a second safety member associated with the bush 4. In particular at least one of the safety members is movable through a movement having a radial component with respect to longitudinal axis X-X between an engaged position (Figure 3) and a disengaged position (Figure 5) in which it respectively engages and disengages the other safety member.

In order to simplify the description of this invention reference will be made in a non-restrictive way to a preferred embodiment in which the safety members are a first movable safety member 10 and a second stationary safety member 11. In the example, the movable safety member 10 is associated with the housing 3 while the stationary safety member 11 is associated with the bush 4. Alternatively the movable safety member 10 could be associated with the bush 4 while the stationary safety member 11 could be associated with the housing 3. Furthermore, as an alternative, safety members 10 and 11 may both be capable of movement with respect to each other. Advantageously the safety member 10 can move in a substantially radial direction Y-Y.

The toolholder 1 further comprises second elastic means 12 which act at least on one of the safety members 10, 11 with a predetermined elastic load F₂ to keep the safety member engaged with the other safety member. In this way the angular orientation of the spindle 2 is maintained when the bush 4 is in the stand-by position. Advantageously the elastic means 12 act on the movable safety member 10 with a predetermined elastic load F₂ to keep it engaged with the safety member 11.

When the elastic load F₂ of the elastic means 12 is exceeded, safety members 10 and 11 disengage from each other to allow the spindle 2 to rotate (Figure 5). In particular the movable safety member 10 disengages from the stationary safety member 11 against the elastic load F₂ of the elastic means 12, moving substantially in the radial direction Y-Y. The elastic load F₂ is exceeded, for example, by a torque applied to the spindle 2 from matching coupling means 14 when bush 4 is in the stand-by position. This can happen, for example, because of an overload on coupling means 5 and 6 of the toolholder 1 due to incomplete engagement/disengagement of the actuators matching coupling means 14 with/from the bush 4. It should be pointed out that in the absence of the elastic means 12 acting on the safety member 10, any torque applied to the spindle 2, with the bush 4 in the stand-by position, would bring about an attempt of incorrect disengagement of safety members 10 and 11, undoubtedly resulting in damage and, at worst, in breakage of one of these or both the safety members. The presence of elastic means 12 according to the invention on the contrary makes it possible for safety members 10 and 11 to disengage from each other when elastic load F₂ is exceeded, thus avoiding damage and/or breakage.

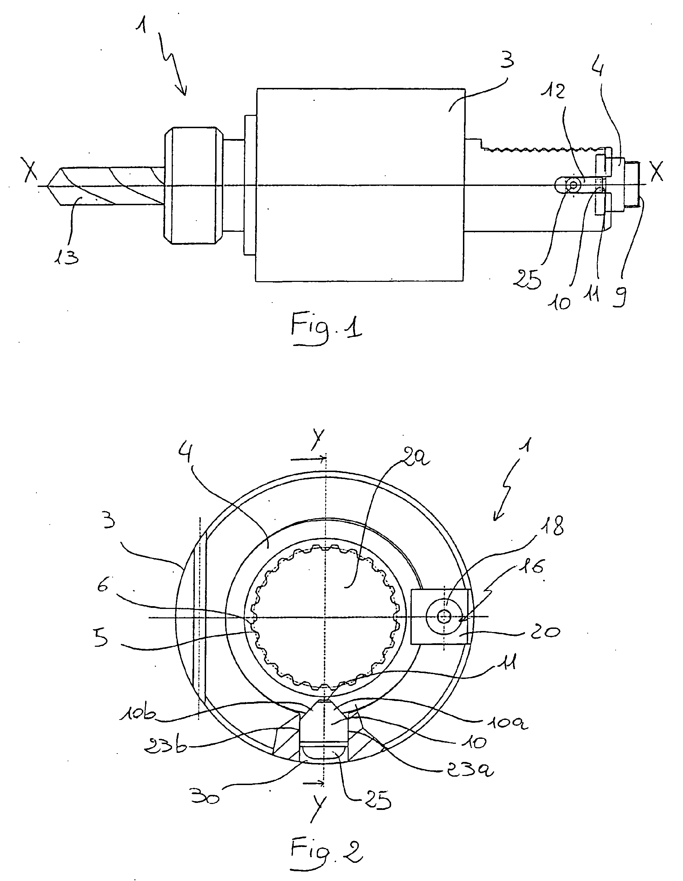

With reference to Figures 1 to 5, a first embodiment of safety means 10 and 11 according to the invention is illustrated. According to this embodiment the safety member 10 has the form of a tooth extending in a predominantly radial direction Y-Y while the safety member 11 has the form of a slot made in the flange 15 of the bush 4. The slot 11 extends along longitudinal axis X-X to allow the tooth 10 to engage and disengage with the slot 11 through axial movement of the bush 4 from the stand-by position (Figure 3) to the operating position (Figure 4).

In order to allow the tooth 10, in the stand-by position, to disengage from the slot 11 against elastic load F₂ of elastic means 12, the tooth 10 has at least one surface inclined with respect to the radial direction Y-Y, in the case in point two which are indicated by 10a and 10b and which are provided on the sides of the tooth 10. Inclined surfaces 10a and 10b act as guides when the tooth 10 is disengaging from the slot 11 against the elastic load F₂ of the elastic means 12. Advantageously, the tooth 10 is partly inserted in the slot 11 and as a result of inclined surfaces 10a and 10b can disengage from the slot 11 against the elastic load of elastic means 12. Alternatively inclined surfaces may be provided on the inner walls of the slot 11.

According to a preferred embodiment, elastic means 12 comprise a leaf spring which is in itself known and is made, for example, from harmonic steel. The leaf spring 12 is secured at one end 12a to the housing 3, for example through a screw 25, and has the safety member 10 at the other free end 12b.

Advantageously, the elastic means 12 and the safety member 10 form a single member made in one piece, indicated by 21. In this way the member 21 which carries the elastic means 12 and the safety member 10 is more robust and has greater mechanical strength while leaving the elasticity provided by elastic means 12 unchanged.

In order to make it possible for the tooth 10 to move radially along the axis Y-Y and therefore engage/disengage with/from the slot 11, the housing 3 has a notch 23 provided in housing 3, for example by milling. The notch 23 has two surfaces 23a and 23b which extend longitudinally and radially so as to define a guide seat 30 for the tooth 10 when it is moving radially from and towards the longitudinal slot 11.

The arrangement described above with reference to Figures 1 to 5 may advantageously be used in the case of spindles of large dimensions.

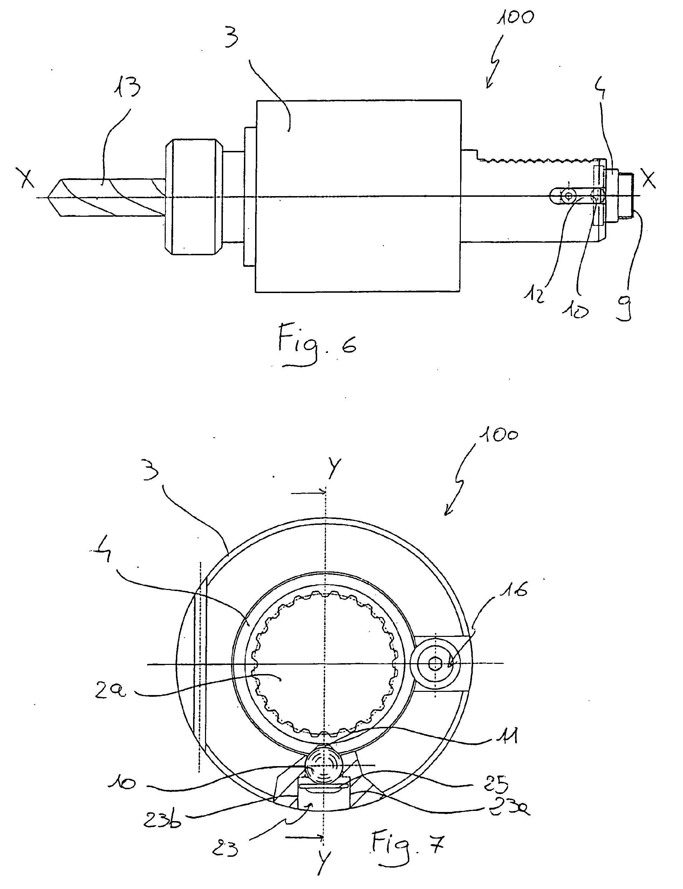

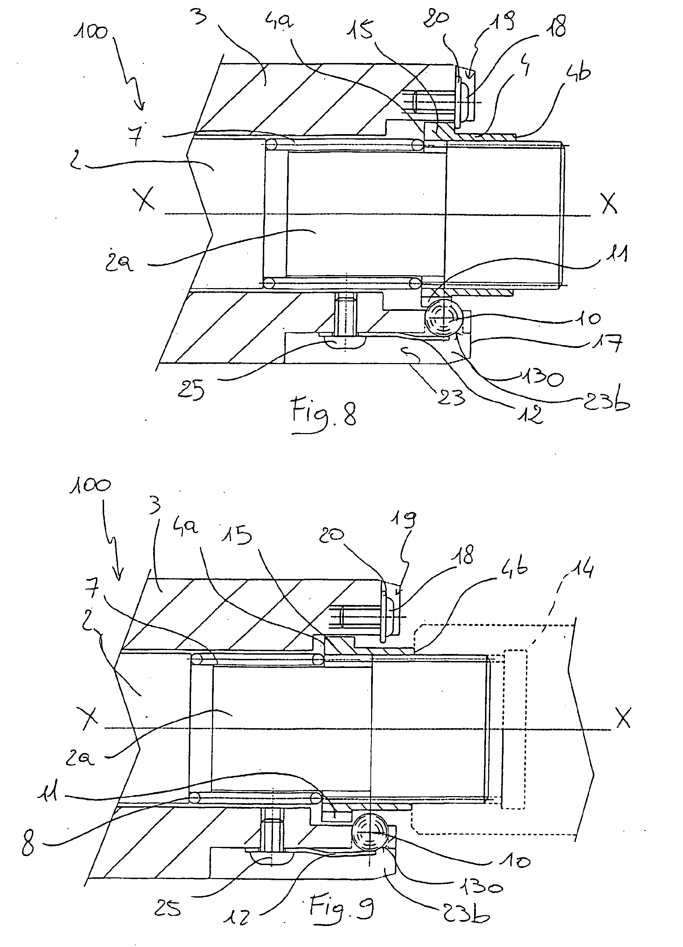

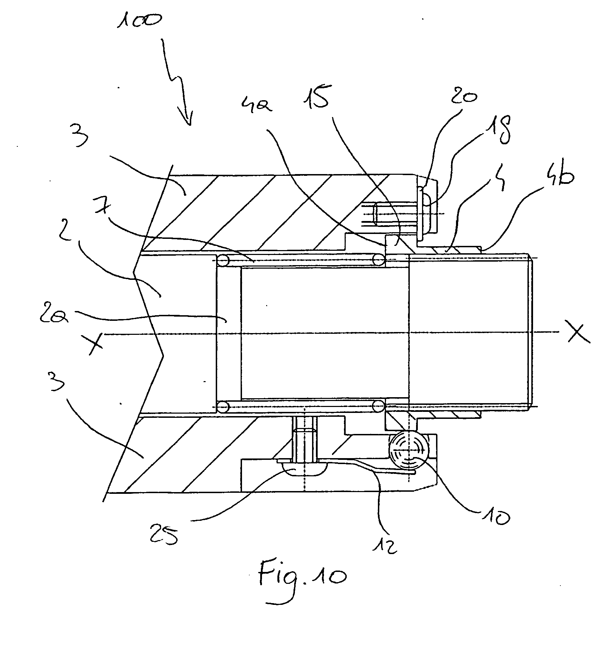

With reference to Figures 6 to 10, 100 as a whole indicates a rotating toolholder according to a second alternative embodiment of this invention. The parts of rotating toolholder 100 which are structurally and functionally equivalent to rotating toolholder 1 are referred to using the same reference numbers and will not be described further. This also applies to the further embodiments which will be described below.

According to this second embodiment, the safety member 10 has the form of a sphere which is subjected to the elastic load of the elastic means 12. This embodiment avoids the use of inclined surfaces on the movable safety member 10 while at the same time assisting the safety member 10 to disengage from the slot 11.

In order to allow the sphere 10 to disengage from the slot 11, the sphere 10 is partly inserted into th eslot 11 and as a result of its curved surface can disengage from the slot 11 against the elastic load of the elastic means 12. For example, the sphere 10 inserts into the slot 11 until the tangent at the point of contact between the sphere 10 and the inner surfaces of the slot 11 forms an angle, with respect to the radial axis Y-Y, which lies outside the self-locking range, for example an angle greater than 45°.

The housing 23 hays a through radial hole 130 defining a cylindrical guide seat for the sphere 10 in its radial movement towards and away from the slot 11.

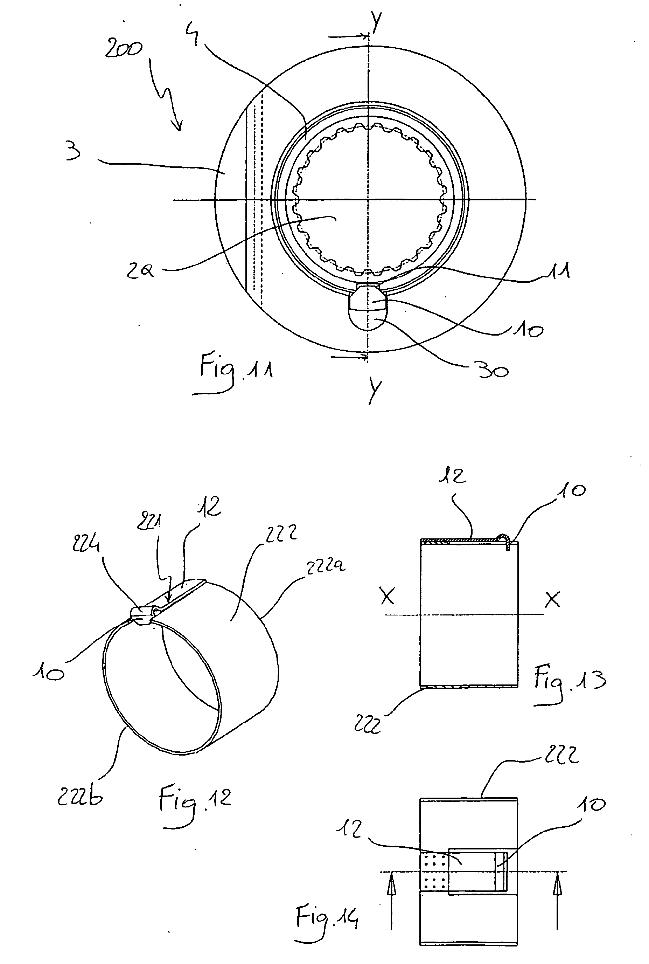

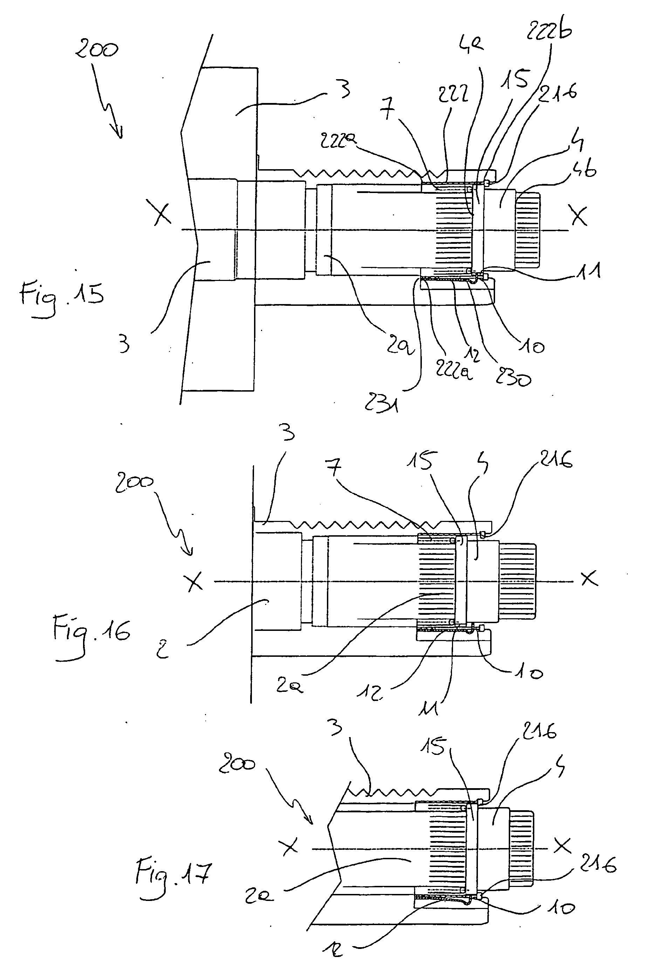

With reference to Figures 11 to 17, 200 indicates as a whole a rotating toolholder according to a third alternative embodiment of this invention. According to this embodiment a single-piece member 221 which comprises the elastic means 12 and the tooth 10 is secured to a sleeve 222, for example by welding. This arrangement makes it possible to apply safety means according to the invention also in the case where the diameter of the shank 2a of the spindle 2 is too small to allow a leaf spring 12 to be secured by means of a screw as described with reference to the first and second embodiments described above.

The sleeve 222 may be made of a material which is different from that of the single-piece member 221 incorporating the leaf spring 12 and the tooth 10. For example, the sleeve 222 may be of steel while single-piece member 221 is of harmonic steel for springs. For the purposes of associating the sleeve 222 with the housing 3 an annular seat extending axially along the longitudinal axis X-X is provided within the inner walls of the housing 3 so as to form a cylindrical seat 230 capable of receiving the sleeve 222 and having a stop base 231 against which the end 222a of the sleeve 222 abuts.

A stop ring 216, for example of the Seeger type, associated with the end 222b of the sleeve 222, which is opposite to the end 222a, is used to prevent axial movement of the sleeve 222 along the axis X-X in the seat 230. It will be noted that, advantageously, the ring 216 acts also as an axial stop member for the flange 15 of the bush 4. The use of screw 18 and washer 20 as a removable axial stop member is avoided in this way.

Advantageously, the single-piece member 221, in proximity of the tooth 10, is of an undulating shape such as to form a projection 224 which facilitates insertion of the sleeve 222 into the housing 3 and its correct angular position.

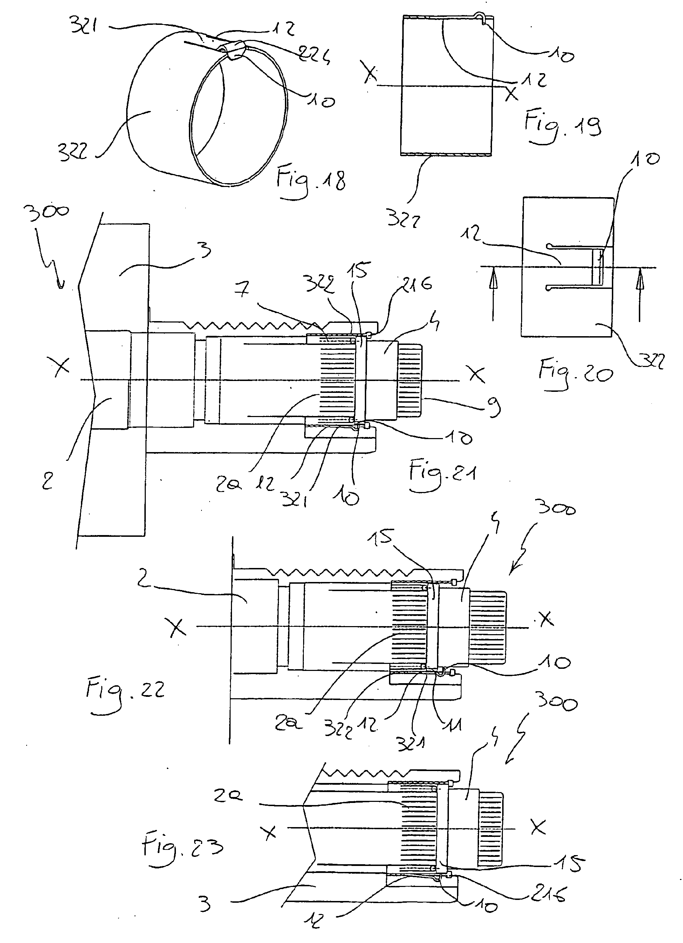

With reference to Figures 18 to 23, 300 indicates as a whole a rotating toolholder according to a fourth alternative embodiment of this invention. According to this embodiment a single-piece member 321 carrying the elastic means 12 and the safety tooth 10 can be made of one piece in a sleeve 322 as shown in Figures 18-20. Although, from a construction point of view, more complex than the previous embodiments, this embodiment makes it possible to obtain the elastic means 12, the safety member 10 and the sleeve 322 in a single piece.

As will be appreciated from what has been described, the rotating toolholder according to this invention makes it possible to satisfy the requirements and overcome the disadvantages mentioned in the introductory part of this description in comparison with the known art. The advantages deriving from the use of this invention mainly lie in the fact that it provides a toolholder whose centering bush can be fitted and replaced even when the toolholder is assembled, avoiding dismantling of the toolholder.

Obviously in order to satisfy contingent and specific requirements a person skilled in the art could apply many modifications and variants to the rotating toolholder according to the invention described above, all of which however lie within the scope of protection of the invention as defined by the following claims.

## Claims

1. Rotating toolholder (1), comprising:
- a spindle (2) mounted in a housing (3) in such a way as to rotate about a longitudinal axis (X-X),
- a bush (4) associated with the spindle (2) in such a way that it can move axially along said longitudinal axis (X-X) and rotates together with the spindle (2),
- elastic means (7) acting on said bush (4) with a predetermined elastic load to oppose axial movement of the bush (4) in said longitudinal direction (X-X), and
- safety means (10, 11) capable of changing reversibly from a disengaged configuration to an engaged configuration in which they interact together to oppose the rotation of the spindle (2),
- said bush (4) being able to move axially between an operating position in which the spindle (2) is free to rotate and a stand-by position in which rotation of the spindle (2) is prevented when said safety means (10,11) are in the engaged configuration,
**characterised in that** said safety means (10,11) comprise a first safety member associated with the housing (3) and a second safety member associated with the bush (4), at least one (10) of the said safety members being movable, through a movement having a radial component (Y-Y) with respect to said longitudinal axis (X-X), between an engaged position and a disengaged position in which it respectively engages and disengages with/from the other safety member (11) and
**in that** it comprises second elastic means (12) acting at least on one (10) of said safety members (10,11) with a predetermined elastic load to keep said safety member (10) engaged with the other safety member (11).

2. Toolholder (1) according to claim 1, in which said first safety member (10) is movable and said second safety member (11) is stationary, said elastic means (12) acting on said movable safety member (10) to keep said movable safety member (10) engaged with said stationary safety member (11)

3. Toolholder (1) according to claim 2, in which said first safety member (10) is in the form of a tooth having at least one surface (10a) inclined with respect to said radial direction (Y-Y).

4. Toolholder (1) according to claim 2, in which said first safety member (10) is in the form of a sphere.

5. Toolholder (1) according to any one of claims 2 to 4, in which said stationary second safety member (11) is a slot extending along said longitudinal axis (X-X) and capable of receiving at least one portion of said movable first safety member (10).

6. Toolholder (1) according to any of claims 2 to 5, in which said first safety member (10) is associated with said housing (3) and said second safety member (11) is associated with said bush (4).

7. Toolholder (1) according to claim 6, in which said second elastic means (12) comprise a leaf spring secured at one end (12a) to said housing (3) and having said first safety member (10) at the other free end (12b).

8. Toolholder (1) according to claim 7, in which said housing (3) has a guide seat (30, 130) for said first safety member (10) in its radial movement (Y-Y) away from and towards said second safety member (11).

9. Toolholder (1) according to any of claims 2 to 8, in which said second elastic means (12) and said first safety member (10) form a single-piece member (21) capable of being secured to a sleeve (222) associated internally with the said housing (3).

10. Toolholder (1) according to any of claims 1 to 9, comprising a removable axial stop member (16) associated with said housing (3) to limit axial movement of said bush (4).

## Patentansprüche

1. Rotierender Werkzeughalter (1), der aufweist:
- eine Spindel (2), die in einem Gehäuse (3) dergestalt angebracht ist, dass sie um eine Längsachse (X-X) rotiert,
- eine Hülse (4), die mit der Spindel (2) dergestalt verbunden ist, dass sie sich axial entlang der Längsachse (X-X) bewegen kann und zusammen mit der Spindel (2) rotiert,
- elastische Mittel (7), die auf die Hülse (4) mit einer bestimmten elastischen Belastung einwirken, um der axialen Bewegung der Hülse (4) in der Längsrichtung (X-X) entgegenzuwirken, und
- Sicherheitsmittel (10, 11), die umkehrbar von einer nicht im Eingriff befindlichen Anordnung in eine im Eingriff befindliche Anordnung wechseln können, in der sie zusammenwirken, um der Rotation der Spindel (2) entgegenzuwirken,
- wobei die Hülse (4) sich axial bewegen kann zwischen einer Betriebsposition, in der die Spindel (2) frei rotieren kann, und einer Bereitschaftsposition, in der die Rotation der Spindel (2) unterbunden ist, wenn sich die Sicherheitsmittel (10,11) in der im Eingriff befindlichen Anordnung befinden,
**dadurch gekennzeichnet, dass** die Sicherheitsmittel (10,11) ein erstes Sicherheitselement aufweisen, das mit dem Gehäuse (3) verbunden ist, und ein zweites Sicherheitselement, das mit der Hülse (4) verbunden ist, wobei wenigstens eines (10) der Sicherheitselemente beweglich ist, durch eine Bewegung mit einer radialen Komponente (Y-Y) bezüglich der Längsachse (X-X), zwischen einer im Eingriff befindlichen Position und einer nicht im Eingriff befindlichen Position, in der es jeweils in das andere Sicherheitselement (11) eingreift und sich aus dem Eingriff davon löst, und darin, dass es zweite elastische Mittel (12) aufweist, die auf wenigstens eines (10) der Sicherheitselemente (10,11) mit einer bestimmten elastischen Belastung einwirken, um das Sicherheitselement (10) mit dem anderen Sicherheitselement (11) in Eingriff zu halten.

2. Werkzeughalter (1) gemäß Anspruch 1, wobei das erste Sicherheitselement (10) beweglich ist und das zweite Sicherheitselement (11) feststehend ist, wobei die elastischen Mittel (12) auf das bewegliche Sicherheitselement (10) einwirken, um das bewegliche Sicherheitselement (10) im Eingriff mit dem feststehenden Sicherheitselement (11) zu halten.

3. Werkzeughalter (1) gemäß Anspruch 2, wobei das erste Sicherheitselement (10) die Form eines Zahns aufweist, von dem wenigstens eine Fläche (10a) bezüglich der radialen Ausrichtung (Y-Y) geneigt ist.

4. Werkzeughalter (1) gemäß Anspruch 2, wobei das erste Sicherheitselement (10) die Form einer Kugel aufweist.

5. Werkzeughalter (1) gemäß einem der Ansprüche 2 bis 4, wobei das feststehende zweite Sicherheitselement (11) ein Schlitz ist, der sich entlang der Längsachse (X-X) erstreckt und der wenigstens einen Teil des beweglichen ersten Sicherheitselements (10) aufnehmen kann.

6. Werkzeughalter (1) gemäß einem der Ansprüche 2 bis 5, wobei das erste Sicherheitselement (10) mit dem Gehäuse (3) verbunden ist und das zweite Sicherheitselement (11) mit der Hülse (4) verbunden ist.

7. Werkzeughalter (1) gemäß Anspruch 6, wobei das zweite Plastikmittel (12) eine Bandfeder aufweist, die an einem Ende (12a) am Gehäuse (3) befestigt ist und ein erstes Sicherheitselement (10) am anderen freien Ende (12b) aufweist.

8. Werkzeughalter (1) gemäß Anspruch 7, wobei das Gehäuse (3) einen Führungssitz (30, 130) für das erste Sicherheitselement (10) in der radialen davon wegführenden und in Richtung des zweiten Sicherheitselements (11) gehenden Bewegung (Y-Y) aufweist.

9. Werkzeughalter (1) gemäß einem der Ansprüche 2 bis 8, wobei das zweite elastische Element (12) und das erste Sicherheitselement (10) ein einteiliges Element (21) bilden, das an einer Hülse (222) befestigt werden kann, die innen mit dem Gehäuse (3) verbunden ist.

10. Werkzeughalter (1) gemäß einem der Ansprüche 1 bis 9, ein entfernbares axiales Stoppelement (16) aufweisend, das mit dem Gehäuse (3) verbunden ist, um die axiale Bewegung der Hülse (4) zu beschränken.

## Revendications

1. Porte-outil rotatif (1) comportant :
- une broche (2) montée à l'intérieur d'un logement (3), de manière à pouvoir tourner selon un axe longitudinal (X-X),
- une douille (4) associée à la broche (2) de manière à pouvoir se déplacer axialement le long de l'axe longitudinal (X-X) et en rotation avec la broche (2),
- des moyens élastiques (7) agissant sur ladite douille (4) avec une charge élastique prédéterminée pour s'opposer au mouvement axial de la douille (4) dans ladite direction longitudinale (X-X), et
- des moyens de sécurité (10, 11) apte à passer d'une configuration de désengagement à une configuration d'engagement dans laquelle ils interagissent pour s'opposer à la rotation de la broche (2), et inversement,
- ladite douille (4) pouvant se déplacer axialement entre une position de fonctionnement dans laquelle la broche (2) est libre en rotation et une position d'attente dans laquelle la rotation de la broche est empêchée lorsque lesdits moyens de sécurité (10, 11) sont dans la position d'engagement, **caractérisé en ce que** lesdits moyens de sécurité (10, 11) comportent un premier élément de sécurité associé au logement (3) et un deuxième élément de sécurité associé à la douille (4), au moins un (10) desdits éléments de sécurité étant amovible, selon un mouvement ayant une composante radiale (Y-Y) par rapport audit axe longitudinal (X-X), entre une position d'engagement et une position de désengagement dans lesquelles il engage, respectivement se désengage de l'autre élément de sécurité (11) et,
**en ce qu'**il comporte des seconds moyens élastiques (12) agissant sur au moins un (10) desdits éléments de sécurité (10, 11) avec une charge élastique prédéterminée pour maintenir ledit élément de sécurité (10) engagé avec l'autre élément de sécurité (11).

2. Porte-outil (1) selon la revendication 1, dans lequel ledit premier élément de sécurité (10) est amovible et ledit second élément de sécurité (11) est fixe, lesdits moyens élastiques (12) agissant sur ledit élément de sécurité amovible (10) pour maintenir ledit élément de sécurité amovible (10) engagé avec ledit élément de sécurité fixe (11).

3. Porte-outil (1) selon la revendication (2) dans lequel ledit premier élément de sécurité (10) a la forme d'une dent comportant au moins une surface (10a) inclinée par rapport à la direction radiale (Y-Y).

4. Porte-outil (1) selon la revendication (2), dans lequel ledit premier élément de sécurité (10) a la forme d'une sphère.

5. Porte-outil (1) selon l'une quelconque des revendications 2 à 4, dans lequel ledit second élément de sécurité fixe (11) est une fente s'étendant le long dudit axe longitudinal (X-X) et apte à recevoir au moins une partie dudit premier élément de sécurité amovible (10).

6. Porte-outil (1) selon l'une quelconque des revendications 2 à 5, dans lequel ledit premier élément de sécurité (10) est associé audit logement (3) et ledit second élément de sécurité (11) est associé à ladite douille (4).

7. Porte-outil (1) selon la revendication 6, dans lequel lesdits second moyens élastiques (12) comportent un ressort à lames fixé par une extrémité (12a) audit logement (3) et comportant à l'autre extrémité libre (12b) ledit premier élément de sécurité (10).

8. Porte-outil (1) selon la revendication 7, dans lequel ledit logement (3) comporte un guide (30, 130) pour ledit premier élément de sécurité (10) dans son mouvement radial (Y-Y) à partir de et vers ledit second élément de sécurité (11).

9. Porte-outil (1) selon l'une quelconque des revendications 2 à 8, dans lequel lesdits second moyens élastiques (12) et ledit premier élément de sécurité (10) forment un élément d'une seule pièce (21) apte à être fixé à un manchon (222) associé par l'intérieure audit logement (3)

10. Porte-outil (1) selon l'une quelconque des revendications 1 à 9, comportant un arrêt axial amovible (16) associé audit logement (3) pour limiter le mouvement axial de ladite douille (4).
